# EUROPÄISCHE PATENTANMELDUNG

(11) **EP 4 722 633 A2**
(43) Veröffentlichungstag der Anmeldung: **08.04.2026**
(21) Anmeldenummer: 25206048.8
(22) Anmeldetag: 01.10.2025
(51) Int. Cl.: F41H 11/16, F41H 13/00, B64U 10/13

(54) **FLUGDROHNE ZUR RÄUMUNG VON EXPLOSIVZIELEN MIT HILFE ELEKTROMAGNETISCHER RÄUMPULSE**

(30) Priorität: 04.10.2024 DE 102024003227
(71) Anmelder: Diehl Defence GmbH & Co. KG, 88662 Überlingen (DE)
(72) Erfinder: Schoos, Stefan, 90402 Nürnberg (DE); Mirschberger, Jörg, 91235 Velden (DE)
(74) Vertreter: Diehl Patentabteilung

(57) **Zusammenfassung**

Bei einer Drohnenanordnung (2) zur Räumung eines Explosiv-Ziels (4), mit wenigstens einer Versorgungsleitung (8), die mit einem ersten Leitungsende (10a) an einer Flugdrohne (6) angeschlossen ist und die mit einem zweiten Leitungsende (10b) an einer am Boden (4) befindlichen Energiequelle (12) anschließbar ist, und die dazu eingerichtet ist, die Flugdrohne (6) im Betrieb (B) wenigstens mit elektrischer Energie (16) aus der Energiequelle (12) zu versorgen, mit der Flugdrohne (6), die wenigstens eine Räumquelle (20) enthält, die dazu eingerichtet ist, aus der über die Versorgungsleitung (8) zugeführten Energie (16) einen elektromagnetischen Räumpuls (24) zu erzeugen, der dazu eingerichtet ist, von der Flugdrohne (6) weg auf das Ziel (4) hin ausgesendet zu werden, um auf dieses einzuwirken und dadurch zu räumen, sind die Räumquellen (20) hinsichtlich der Erzeugung der Räumpulse (24) halbleiterbasiert ausgeführt.

Bei einem Verfahren zur Räumung eines Explosiv-Ziels (4), wird die Drohnenanordnung (2) nach einem der vorhergehenden Ansprüche bereitgestellt, wird die Energiequelle (12) am Boden (14) bereitgestellt, wird die Drohnenanordnung (2) mit dem zweiten Leitungsende (10b) an die Energiequelle (12) angeschlossen, wird die Flugdrohne (6) im Betrieb (B) wenigstens mit elektrischer Energie (16) aus der Energiequelle (12) versorgt, wird die Flugdrohne (6) geflogen, und erzeugt die Räumquelle (20) während des Fluges der Flugdrohne (6) aus der über die Versorgungsleitung (8) zugeführten Energie (16) einen elektromagnetischen Räumpuls (24), der von der Flugdrohne (6) weg auf das Ziel (4) hin ausgesendet wird, um auf dieses einzuwirken und dadurch zu räumen.

## Beschreibung

Die Erfindung betrifft die Räumung von Explosivzielen, insbesondere nicht umgesetzter Minen und/oder nicht umgesetzter Sprengfallen und/oder von ist.

Aus der DE 197 44 794 A1 ist ein Verfahren zur Räumung von Plastikminen und eine dazu verwendbare Vorrichtung bekannt, bei dem/der eine zivile Räumung der Minenfelder von nicht vollständig metallummantelten Sprengkörpern, wie etwa Minen, insbesondere Anti-Personen-Minen, sog. APMs, im folgenden der Einfachheit halber als Plastikminen bezeichnet, zuverlässig, schnell und auch kostengünstig erfolgen kann. Dies wird hinsichtlich des Verfahrens dadurch erreicht, dass gebündelte Mikrowellen hoher Leistung emittiert und das verminte Gelände bzw. der Lageort der Minen gezielt bestrahlt wird. Bevorzugt wird dazu zunächst das minenverseuchte Gelände mittels der Strahlung gerastert, anschließend mittels Radardetektoren anhand der Frequenz und Intensität der Rückstrahlung Rückschlüsse auf die genaue Lage der Minen gezogen und diese schließlich gezielt bestrahlt. Zur Bestrahlung dient bevorzugt ein Gyrotron, also eine Elektronenkanone in der Elektronen innerhalb eines Hohlraumresonators durch starke Magneten auf spiralförmige Bahnen gezwungen werden. Die so entstandene kohärente Mikrowellenbestrahlung verlässt das Gyrotron durch ein Mikrowellentransmissionsfenster und wird anschließend mittels quasioptischer Reflektoren umgelenkt und evtl. fokussiert.

Der Mikrowellenemitter kann an bzw. innerhalb eines Fahrzeuges oder auch eines Flugzeuges oder eines Hubschraubers montiert werden. Die Energieversorgung ist durch die Mitführung eines Stromgenerators gewährleistet. Dabei ist die Fahrzeugelektronik gegen evtl. auftretende Streustrahlung zuverlässig abzuschirmen.

Aufgabe der vorliegenden Erfindung ist es, Verbesserungen im Hinblick auf die Räumung von Minen vorzuschlagen.

Die Aufgabe wird gelöst durch eine Drohnenanordnung gemäß Patentanspruch 1. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Die Drohnenanordnung dient bzw. ist eingerichtet zur Räumung eines Explosiv-Ziels (kurz "Ziel"). Der Begriff "Explosivziel" ist hier weit zu verstehen. Eingeschlossen sind alle potentiell gefährlichen explosiven, umsetzenden oder deflagrierenden Gegenstände und Anordnungen, insbesondere zum Beispiel nicht ausgelöste / umgesetzte Minen und nicht ausgelöste / umgesetzte Sprengfallen (IED, improvised explosive device) und Blindgänger (UXO, Unexploded Explosive Ordnance).

Auch der Begriff "Räumung" ist weit zu verstehen und schließt sämtliche Maßnahmen zur temporären oder dauerhaften Unschädlichmachung entsprechender Ziele ein, insbesondere deren Inaktivierung ohne Umsetzung und deren gezielte Umsetzung, welche dann insbesondere bei gesicherter Umgebung stattfinden kann.

Die Drohnenanordnung enthält wenigstens eine Versorgungsleitung. Die Versorgungsleitung ist mit einem bzw. ihrem ersten Leitungsende an einer Flugdrohne angeschlossen. Mit einem bzw. ihrem zweiten Leitungsleitungsende ist die Versorgungsleitung an einer Energiequelle anschließbar und im Betrieb / beim Einsatz der Drohnenanordnung angeschlossen. Die Energiequelle ist eine solche, die sich auf dem Boden, d.h. Erdboden befindet. Die Energiequelle ist insbesondere ein Generator und/oder Energiespeicher, wie er im Zusammenhang mit Vorrichtungen zur Erzeugung von HPEM-DS-Pulsen (High Power Electromagnetics / damped sinusoidal) eingesetzt wird, um die Pulsenergie zu liefern.

Die Versorgungsleitung ist dazu eingerichtet, die Flugdrohne im Betrieb wenigstens mit elektrischer Energie aus der Energiequelle zu versorgen, diese also von der Energiequelle zur Flugdrohne zu leiten. Unter "Betrieb" ist insbesondere der Flugbetrieb der Drohne zu verstehen, wenn diese sich also entfernt vom Boden in der Luft im Flug befindet. Im Betrieb ist die Versorgungsleitung dann an der Energiequelle angeschlossen, und die Energiequelle im Betrieb / betriebsbereit, sodass diese über die Versorgungsleitung die benötigte Energie an die Flugdrohne übertragen kann.

"Wenigstens mit elektrischer Energie" ist so zu verstehen, dass auch weitere Energie / Signale / Daten usw. über die Versorgungsleitung übertragen werden können, und zwar in beide Richtungen zwischen Flugdrohne und Energiequelle bzw. einer weiteren, an der Versorgungsleitung angeschlossenen Einheit, z.B. einer Bodenstation / Kommandozentrale zur Durchführung der Räumung. Dies schließt zum Beispiel die Übertragung von Bilddaten einer an der Drohne befindlichen Kamera zur Bodenstation und die Übertragung von Lenkbefehlen an die Drohne von der Bodenstation ein.

Die Drohnenanordnung enthält die Flugdrohne.

Die Flugdrohne enthält wenigstens eine Räumquelle. Die Räumquelle ist dazu eingerichtet, aus der Energie, die ihr über die Versorgungsleitung zugeführt ist bzw. wird, einen elektromagnetischen Räumpuls zu erzeugen. Der Räumpuls (bzw. die Räumquelle in Bezug auf diesen) ist wiederum dazu eingerichtet, von der Flugdrohne weg auf das Ziel hin ausgesendet zu werden, um auf diesen einzuwirken. Zweck ist es schlussendlich, durch die Einwirkung des Räumpulses auf das Ziel dieses möglichst fernauszulösen oder fernzudeaktivieren, und dadurch zu räumen. Hierzu werden in der Regel mehrere Räumpulse benötigt, die sukzessive von der Flugdrohne ausgesendet werden. "Räumen" schließt hier jede zumindest temporäre oder dauerhafte Unschädlichmachung des Ziels ein, so dass dieses z.B. gefahrlos entfernt, passiert, gemieden oder zerstört werden kann. Die Räumung kann dabei z.B. eine temporäre oder dauerhafte Inaktivierung oder endgültige Umsetzung eines Explosivstoffes im Ziel sein.

Die Erzeugung des Räumpuls ist "aus der zugeführten Energie" bedeutet, dass insbesondere ausschließlich die über die Versorgungsleitung zugeführten Energie dazu verwendet wird, den Räumpuls zu erzeugen bzw. dessen abgestrahlten Energieinhalt zu bilden. Dem Räumpuls bzw. dessen Erzeugung wird also keine weitere sonstige Energie aus der Flugdrohne zugeführt. Mit anderen Worten wird wenigstens ein Teil der zugeführten Energie in der Flugdrohne für den Räumpuls bzw. dessen Erzeugung verwendet. Gegebenenfalls wird über die Versorgungsleitung oder auch anderweitig weitere Energie zugeführt (bzw. ggf. aus einem Energiespeicher in der Drohne entnommen), die dann anderweitig in der Flugdrohne verwendet wird, zum Beispiel zur Versorgung von elektrischen und elektronischen Komponenten im Inneren der Flugdrohne (elektrischer Flugantrieb, Kommunikation, Steuerung, Lenkung, Kamerabetrieb, ...).

Die Räumquellen sind hinsichtlich der Erzeugung der Räumpulse halbleiterbasiert, ausgeführt. Auch der Begriff "halbleiterbasiert" ist hier weit zu verstehen in dem Sinne, dass zumindest keine Funkenstrecken an der Erzeugung der Räumpulse beteiligt sind. An der Erzeugung der Räumpulse sind diesbezüglich also (neben sonstigen Komponenten) Halbleiterbauteile, nicht jedoch Funkenstrecken, beteiligt. Insbesondere enthalten die Räumquellen also keine Funkenstrecken.

Die Flugdrohne ist insbesondere eine Helikopterdrohne, also mit wenigstens einem Propeller / Rotor betrieben, also ein sogenannter Multikopter (z.B. Quadro- / Oktokopter). Die Flugdrohne kann dabei insbesondere auf Basis einer kommerziell erhältlichen Schwerlast-Flugdrohne aufgebaut sein, die erfindungsgemäß ertüchtigt ist.

Gemäß der Erfindung ist es dank der Versorgungsleitung möglich, Explosivziele einfach und unaufwändig mit einem vergleichsweise kleinen und leichten Fluggerät, nämlich einer Drohne, elektromagnetisch zu räumen. Ein großer und schwerer Energieerzeuger / Energiespeicher für die Erzeugung der Räumpulse an Bord der Flugdrohne ist vermieden. Dies wird weiter begünstigt durch die Ausführung der Räumquellen halbleiterbasiert. So wird synergetisch eine vergleichsweise kleine, leichte und leistungsfähige Flugdrohne geschaffen.

In einer bevorzugten Ausführungsform enthält die Flugdrohne wenigstens eine Ortungsquelle. Die Ortungsquelle ist dazu eingerichtet, - insbesondere sinngemäß identisch zu den Räumquellen aus der über die Versorgungsleitung zugeführten Energie - einen elektromagnetischen Ortungspuls zu erzeugen. Der Ortungspuls ist dazu eingerichtet, von der Flugdrohne weg ausgesendet zu werden, um das Ziel zu orten bzw. eine solche Ortung zu ermöglichen. Dies geschieht fachüblich durch Beobachtung der von den Ortungspulsen in der Umgebung der Flugdrohne entstehenden Echos / Reflektionen der Ortungspulse, z.B. an potentiellen Zielen.

Bevorzugt werden also auch die Ortungspulse zumindest teilweise oder vollständig aus der über die Versorgungsleitung zugeführten elektrischen Energie erzeugt. So können beliebig leistungsstarke Ortungspulse erzeugt werden.

Auch die Ortungsquellen sind - sinngemäß gleich wie die Räumquellen - hinsichtlich der Erzeugung des Ortungspulses halbleiterbasiert (also ohne Funkenstrecken) ausgeführt. Daher können auch besonders leichte und kleine und doch leistungsstarke Ortungsquellen etabliert werden, die Gewicht / Größe der Flugdrohne weiter positiv beeinflussen.

Insbesondere enthält die Flugdrohne auch wenigstens einen Ortungsempfänger, um z.B. Rückreflektionen der Ortungspulse aufzufangen und zu verarbeiten oder zumindest zu einer außerhalb der Flugdrohne angeordneten Verarbeitungseinheit, zum Beispiel der Bodenstation, zu übertragen.

Insbesondere umfassen daher die Räumquellen Sendeantennen zur Abstrahlung der Räumpulse und / oder die Ortungsquellen Sendeantennen für die Ortungspulse, insbesondere zusätzlich Empfangsantennen für deren zu empfangende Reaktionen aus der Umgebung der Flugdrohne.

In einer bevorzugten Variante dieser Ausführungsform enthält wenigstens eine der Ortungsquellen daher wenigstens eine Ortungsantenne, wie sie oben bereits genannt wurden. Die Flugdrohne enthält gemäß dieser Ausführungsform wenigstens einen Kernkörper und wenigstens einen aus dem / den Kernkörpern herausragenden / ausgreifenden / vorstehenden Ausleger. Wenigstens eine der Ortungsantennen ist auf einem der Ausleger angeordnet, insbesondere an dessen in Bezug auf die Kernkörper distalem Ende. Somit ist es zum Beispiel möglich, die Räumquellen zur Abstrahlung der Räumpulse (deren Antennen) an dem einzigen Kernkörper anzuordnen und die Ortungsantennen vergleichsweise weit entfernt von diesen an den distalen Enden der Ausleger zu platzieren. Störungen der Ortungsantennen durch die Räumquellen (Beeinflussung, übersprechen, usw.) können somit verringert / vermieden werden.

In einer bevorzugten Variante dieser Ausführungsform enthält die Flugdrohne wenigstens zwei aus dem / den Kernkörpern herausragende Ausleger. An wenigstens zweien der Ausleger ist jeweils wenigstens eine der Ortungsantennen angeordnet. Somit können Ortungsantennen auch zum Beispiel zu einer Triangulation von potentiellen Zielen verwendet werden, insbesondere wenn die Ausleger gegenüberliegend aus dem Kernkörper herausragen. Somit kann ein für die Triangulation maximaler Abstand zwischen den Ortungsantennen erreicht werden.

In einer bevorzugten Ausführungsform ist die Räumquelle dazu eingerichtet, den Räumpuls in zwei orthogonalen Polarisationen / Polarisationsrichtungen zu erzeugen und von der Flugdrohne weg auszusenden. Alternativ oder zusätzlich sind auch die Ortungsquellen (falls solche also vorhanden sind, d.h. in Kombination mit der oben genannten Ausführungsform) dazu eingerichtet, den Ortungspuls in zwei orthogonalen Polarisationen / Polarisationsrichtungen zu erzeugen und von der Flugdrohne weg auszusenden.

Durch die beiden Polarisationen können sowohl die Einwirkung der Räumpulse auf die Explosivziele als auch die Erfassung / Ortung von Explosivzielen durch Ortungspulse verbessert werden.

In einer bevorzugten Ausführungsform ist wenigstens eine der Räumquellen eine HPEM-DS-Quelle; der Räumpuls ist also dann ein HPEM-DS-Puls, die Räumquelle stellt also ein HPEM-DS-System dar. Durch entsprechende HPEM-DS-Pulse erfolgt eine besonders effektive Beeinflussung bzw. Räumung von Explosivzielen.

Alternativ oder zusätzlich - wieder falls vorhanden, wie oben bereits erläutert - ist wenigstens eine der Ortungsquellen eine UWB-Quelle (Ultra Wide Band). Der Ortungspuls ist dann ein UWB-Puls, die Ortungsquelle also ein UWB-System. Durch UWB-Pulse kann eine besonders effektive Ortung von Explosivzielen (und ggf. auch zweckentfremdet deren Räumung, siehe unten) erfolgen.

Mit entsprechend halbleiterbasierten Räumquellen und Ortungsquellen lassen sich derartige Pulse besonders gut erzeugen.

In einer bevorzugten Variante dieser Ausführungsform ist wenigstens eine Ortungsquelle in Form einer UWB Quelle in der Flugdrohne vorhanden und wenigstens eine der UWB Quellen ist dazu eingerichtet, den von ihr erzeugten und ausgesendeten UWB-Puls zweckentfremdet auch als Räumpuls auf das Ziel hin aussenden zu können.

Mit anderen Worten werden also zweckentfremdete UWB-Ortungspulse der Ortungsquelle als alternative Räumpulse genutzt, wenn zum Beispiel die Räumquelle eine HPEM-Quelle ist und diese bereits erfolglos versucht hat, die Räumung des Ziels mit HPEM-Pulsen zu bewerkstelligen. Somit ist eine besonders effektive Räumung variantenreicher Ziele ermöglicht.

In einer bevorzugten Ausführungsform ist wenigstens eine der Versorgungsleitungen dazu eingerichtet, Lenksignale wenigstens an die Flugdrohne zu senden, um diese vermittels der Lenksignale zu lenken. Insbesondere ist eine der Versorgungsleitungen wie oben schon erwähnt auch dazu eingerichtet, Daten / Signale / etc. auch in Gegenrichtung von der Flugdrohne zum Boden zu übertragen, zum Beispiel Rückmeldungen von der Flugdrohne wie deren Ortsposition, aktuelle Fluglage oder an der Flugdrohne erzeugte Sensordaten / Kamerabilder / -daten, siehe unten.

Somit ist eine leitungsgebundene und somit besonders zuverlässige Lenkung der Flugdrohne bzw. ein hochqualitativer und schneller Datenaustausch mit dieser möglich, z.B., wenn eine der Versorgungsleitungen als Glasfaserleitung ausgeführt ist.

In einer bevorzugten Ausführungsform ist die Flugdrohne im Hinblick auf die Erzeugung der Räumpulse ohne Energiespeicher ausgeführt. Alternativ oder zusätzlich gilt dies auch - falls vorhanden, siehe oben - für die Erzeugung der Ortungspulse. Wie bereits oben erläutert, bringt der Verzicht auf jeden Energiespeicher bzw. die Reduzierung einer Kapazität dessen Vorteile für die Flugdrohne (Gewicht, Volumen, Manövrierbarkeit, usw.). Insbesondere kann die Flugdrohne also völlig ohne oder nur mit vergleichsweise kleinen Energiespeichern (kleine Energiekapazität, kleine Abmessungen) ausgerüstet werden. Beispielsweise ist lediglich ein Energiespeicher für einen Notflugbetrieb vorgesehen, um die Drohne bei Ausfall der Verbindungsleitung noch sicher landen oder zur Bodenstation zurückkehren zu lassen. Auch sind Energiespeicher denkbar, um zumindest zeitweise Kommunikations- / Navigationselektronik zu versorgen und so z.B. eine Funkverbindung zur Flugdrohne aufrecht zu erhalten. Somit wird die Einsatzsicherheit der Drohnenanordnung verbessert.

In einer bevorzugten Ausführungsform enthält die Flugdrohne eine Kameraanordnung. Dies ist eingerichtet bzw. dient zur Abbildung der Umgebung der Flugdrohne in Kamerabildern, die entweder innerhalb der Flugdrohne ausgewertet / genutzt oder zu der Bodenstation übertragen werden. So kann zum Beispiel die Ortung und das Räumen von Zielen sowie auch Flug bzw. Navigation der Flugdrohne kameragestützt und damit verbessert erfolgen. Zum Einsatz können hier insbesondere optische und/oder IR- (infrarot) und/oder UV- (Ultraviolett) Kameras kommen.

In einer bevorzugten Ausführungsform enthält die Flugdrohne wenigstens einen abwerfbaren Markierkörper für Ziele. Durch Markierkörper können zum Beispiel geortete, aber nicht geräumte Ziele am Boden markiert werden, um diese anschließen anderweitig räumen oder gefahrlos passieren / meiden zu können. Alternativ oder zusätzlich enthält die Flugdrohne wenigstens einen abwerfbaren Sprengkörper für Ziele. Durch Sprengkörper können zum Beispiel geortete Ziele gesprengt werden und dadurch geräumt werden, wenn zum Beispiel eine elektromagnetische Räumung nicht gelingt.

Die Aufgabe der Erfindung wird auch gelöst durch ein Verfahren gemäß Patentanspruch 11. Dieses dient - wie die Drohnenanordnung - zur oben erläuterten Räumung von Explosivzielen. Bei dem Verfahren wird die erfindungsgemäße Drohnenanordnung bereitgestellt. Weiterhin wird die Energiequelle am Boden bereitgestellt und die Drohnenanordnung wird mit dem zweiten Leitungsende an die Energiequelle angeschlossen. Die Flugdrohne wird in Betrieb gesetzt und im Betrieb wenigstens mit der elektrischen Energie aus der Energiequelle versorgt. Die Flugdrohne wird geflogen. Sofern ein Ziel vorhanden und geortet ist, bzw. zumindest dessen Ort bekannt ist, erzeugt die Räumquelle während des Fluges der Flugdrohne aus der über die Versorgungsleitung zugeführten Energie einen elektromagnetischen Räumpuls. Der Räumpuls wird dann von der Flugdrohne weg auf das Ziel hin ausgesendet, um auf dieses einzuwirken und dadurch möglichst zu räumen.

Das Verfahren und zumindest ein Teil dessen möglicher Ausführungsformen sowie die jeweiligen Vorteile wurden sinngemäß bereits im Zusammenhang mit der erfindungsgemäßen Drohnenanordnung erläutert. Insbesondere bilden also die oben im Zusammenhang mit der Drohnenanordnung genannten bevorzugten Ausführungsformen auch bevorzugte Ausführungsformen des Verfahrens.

Die Erfindung beruht auf folgenden Erkenntnissen, Beobachtungen bzw. Überlegungen und weist noch die nachfolgenden bevorzugten Ausführungsformen auf. Diese Ausführungsformen werden dabei teils vereinfachend auch "die Erfindung" genannt. Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen.

Gemäß der Erfindung ergibt sich insbesondere ein UAV- (unmanned aerial vehicle), also Drohnen-basiertes System zur Lokalisierung und Beseitigung von Minen und dergleichen, wie z.B. IEDs und UXOs.

Die Erfindung beruht auf der Idee, Erkenntnisse in Bezug auf schnell schaltende Halbleiter anzuwenden, um insbesondere zu einem drohnen basierten Sensor-und Effektorsystem zur Lokalisierung und Räumung von Minen, Sprengfallen (IEDs) und nicht explodierter Munition (UXO) unter Einbeziehung von weiteren Technologien zu gelangen.

Die Erfindung beruht auf folgenden Beobachtungen aus der Praxis:
Die Minensuche erfolgt derzeit durch speziell geschultes Personal größtenteils weiterhin manuell z.B. mit Metalldetektoren und ist daher sehr aufwendig und langsam und mit einer hohen Personengefährdung verbunden. Zwar kommen zunehmend weitere Techniken zum Einsatz die auf chemischen, biologischen, akustischen und elektromagnetischen Verfahren beruhen, jedoch setzt deren Einsatz weiterhin eine direkte Nähe zur Gefährdungsquelle voraus. So muss z.B. ein bodendurchleuchtendes Radarsystem (GPR) von einem Bediener zumeist direkt über das zu erkundende Objekt geführt werden.

Die konventionelle Minenräumung erfolgt zumeist mechanisch durch Räumfahrzeuge oder Minenräumtrupps und damit in direktem Kontakt mit der Gefährdung, oder durch Sprengmittel und der damit einhergehenden Eigengefährdung.

Die Erfindung beruht weiterhin auf der Erkenntnis, dass z.B. gemäß dem Projekt "findmine" der FindMine gGmbH, Josef-Henle-Str. 3, 89257 Illertissen (DE) ein polarimetrisches seitenblickendes Radar mit synthetischer Apertur (SAR) auf einem unbemannten Luftfahrzeug (UAV) im Hinblick auf die Detektion und Lokalisierung von Landminen z.B aus "Burr, Ralf et al., 'UAV-based polarimetric synthetic aperture radar for mine detection', Erschienen in IGARSS 2019 - 2019 IEEE International Geoscience and Remote Sensing Symposium, 2019, verfügbar über "https:// www. findmine. org/ publications" zu "https:// oparu. uni-ulm.de/ items/ 7c6a2057-844f-4608-b17f-947aa264c0fe", Download am 24.06.2024" bekannt ist.

Grundidee der Erfindung ist es, auf schnell schaltenden Halbleitern basierende HPEM-Systeme zur Erzeugung von starken, gedämpften Sinusschwingungen (DS) auf Grund ihrer kompakten Bauweise von flugfähigen Drohnen (UAV) aus einzusetzen. Dort können diese Systeme der Fernauslösung von versteckten Sprengfallen und Minen ohne Personengefährdung dienen.

Die Halbleiter können zudem, ohne größeren technologischen Aufwand dazu weiterentwickelt werden, um sehr starke Ultrabreitband (UWB) Impulse zu erzeugen. Diese können, auf Grund der enthaltenden Frequenzanteile, sowohl eine hohe Ortsauflösung bieten, als auch in das Erdreich eindringen und zur Identifikation von verborgenden Objekten dienen.

In Kombination lässt sich ein in der Ausgangsleistung stufenlos einstellbares, integriertes Sensor- / Effektorsystem realisieren, dass sowohl der Aufklärung über ein UWB-Radarsystem, als auch der direkten Räumung über ein HPEM-DS-System von Sprengfallen ohne Personengefährdung dienen kann.

Das erfindungsgemäße System bietet insbesondere neben der Aufklärung und Lokalisierung von Minen und Sprengfallen zusätzlich die Möglichkeit, diese gezielt durch die Bestrahlung mit starken elektromagnetischen Impulsen ohne Personengefährdung auszulösen oder zu deaktivieren.

Durch die Verwendung von einem halbleiterbasierten System ist es problemlos möglich ein HPEM-System auf einem UAV einzurüsten, da es kompakt genug gestaltet werden kann. Dies ist mit einem konventionellen, funkenstrecken-basierten System u.a. deshalb schwer möglich weil:
- Das nötige Gassystem eine kompakte und leichte Bauweise verhindert.
- Die Pulsstabilität und Repetitionsgenauigkeit unzureichend ist.
- Der Konversionsgrad von Eingangs- zu Pulsausgangsleistung zu gering ist.
- Ein wartungsfreier Dauereinsatz nicht möglich ist.

Durch die Integration in ein UAV ist das System portabel und kann schnell verbracht werden und zügig einen großen Raumsektor durchkämmen.

Sämtliche Kernkomponenten des Systemkonzeptes greifen auf die Basistechnologien "schnell schaltende kompakte Generatoren" und "Drahtlenkung" (Anbindung über eine Versorgungsleitung) zurück und ermöglichen damit die größtmögliche Designhoheit.

Durch die Verwendung von schnellschaltenden Halbleitern zur Erzeugung der UWB Impulse für das Sensorsystem können sehr viel höhere Ausgangsleistungen als mit kommerziellen UWB-Systemen erreicht werden. Hierdurch steigt sowohl die Detektionsreichweite, als auch die Detektionswahrscheinlichkeit. Im Vergleich zu Systemen auf Basis von Step-Recovery-Dioden (SRD) bieten sich deutliche Vorteile im Bereich der Ausgangsleistung.

Kern der Erfindung ist die Kombination von Basistechnologien zu einem Sensor- / Effektor-Gesamtsystem:
- Die Verwendung von schnellschaltenden Halbleitern sowohl für die DS- als auch für die UWB-Erzeugung löst ggf. Handelsprobleme (ITAR, International Traffic in Arms Regulations) und ermöglicht nahezu vollständige Designhoheit.
- Die Montage des Systems auf einem UAV löst die Problematik bei der Erzeugung von sehr hohen Feldstärken. Diese fallen proportional zur Entfernung ab. Das UAV kann jedoch nahe genug an einem lokalisierten Objekt operieren, und dadurch die Entfernungsabhängigkeit kompensieren. Zudem kann das Objekt aus unterschiedlichen Richtungen bestrahlt werden.
- Die Verwendung eines HPEM-DS-Systems zur Auslösung von Minen und Sprengfallen löst die Problematik, dass nicht identifizierte Objekte manuell aus der Nähe gesprengt und dabei Personen gefährdet werden und die Umwelt unnötig in Mitleidenschaft gezogen wird, sollte es sich um einen Falschalarm gehandelt haben.
- Die Verwendung eines UWB-Systems zur Lokalisierung ermöglicht eine hohe Ortsauflösung und GPR-Fähigkeiten zur Durchleuchtung des Bodens und von Blätterwerk.
- Die Verwendung der schnell schaltenden Halbleiter für die Erzeugung der UWB Impulse ermöglicht hohe Ausgangsleistungen und löst die Limitierung der kommerziell verfügbaren UWB-Lösungen.
- Die Versorgung und Lenkung des UAV über ein Kabel löst die Energieversorgungsproblematik, vereinfacht das Systemdesign und ermöglicht lange Einsatzzeiten. Ein HPEM-System auf einem UAV kann auf Grund der Energieversorgungsproblematik bisher nicht sinnvoll realisiert werden.
- Die Nutzung von Technologien aus verschiedenen Projekten erzeugt Synergieeffekte, reduziert Entwicklungsrisiken und ermöglicht ein schnelleres Time-to-Market.

Gemäß der Erfindung ergibt sich insbesondere:
Auf einer geeigneten kommerziell verfügbaren Schwerlastdrohne (UAV) ist ein halbleiterbasiertes HPEM-Antennensystem zur Aussendung von DS-Impulsen in horizontaler und vertikaler Polarisation montiert. Dieses dient der Fernauslösung von Minen, versteckten Sprengfallen und UXOs.

Ein Ausleger dient zur Montage eines auf derselben Halbleitertechnologie basierenden Antennensystems zur Aussendung von UWB-Impulsen zur Lokalisierung von Minen, Sprengfallen und UXOs. Der Ausleger dient sowohl dem Schutz des Sensorsystems durchräumlichen Abstand vor Beeinflussung durch den Effektor, als auch zur besseren Triangulierung der empfangenen Signale. Auch dieses System ist horizontal und vertikal polarisiert ausgeführt.

An das UAV ist ein Kabelsystem zur Energieversorgung und Lenkung angebracht.

Einmal gestartet fliegt das System insbesondere vorgegebene Wegpunkte ab, oder wird von einem Bediener aus sicherer Entfernung gesteuert. Ein integriertes Kamerasystem (optisch, IR, UV) erleichtert den Einsatz bei allen Wettersituationen.

Ist das Einsatzgebiet erreicht wird der UWB-Sensor aktiviert, der durch die Aussendung von leistungsstarken UWB-Impulsen Blätterwerk, Mauern und Boden durchdringen kann. Das Spektrum der ausgesandten Impulse wird so gewählt, dass sowohl eine gute Bodendurchdringung erzielt wird ca.100 MHz - 6 GHz, als auch eine gute Ortsauflösung dR= c/2B erreicht werden kann.

Ist ein potentielles Ziel (z.B. Sprengfalle) lokalisiert, wird die HPEM-Quelle zugeschaltet und das Objekt mit leistungsstarken DS-Impulsen bestrahlt. Der Frequenzbereich ist so gewählt, dass eine möglichst hohe Auslösewahrscheinlichkeit gegeben ist. Wird keine Wirkung erzielt, kann auch ein Versuch mit der UWB-Quelle des Sensorsystems und dessen breiterem Spektrum unternommen werden. Sollte auch dies nicht zur Auslösung des Objektes führen, wird dieses vor dem Weiterflug mit Abwurfkörpern markiert. Alternativ können auch Sprengmittel für eine Notsprengung mitgeführt und abgesetzt werden,

Die Flugdrohne ist insbesondere ausgerüstet mit:
- HPEM DS Sendeantennen Horizontal / Vertikal polarisiert
- UWB - Sende- / Empfangsantennen Horizontal / Vertikal polarisiert für Triangulation, insbesondere zweifach an je einem Freiende eines Auslegers
- Kamerasystem Optisch / IR / UV
- Abwurfmittel zur Markierung und zur Notsprengung
- Kabelverbindung zur Lenkung und Energieversorgung

Weitere Merkmale, Wirkungen und Vorteile der Erfindung ergeben sich aus der nachfolgenden Beschreibung eines bevorzugten Ausführungsbeispiels der Erfindung sowie den beigefügten Figuren. Dabei zeigen, jeweils in einer schematischen Prinzipskizze:

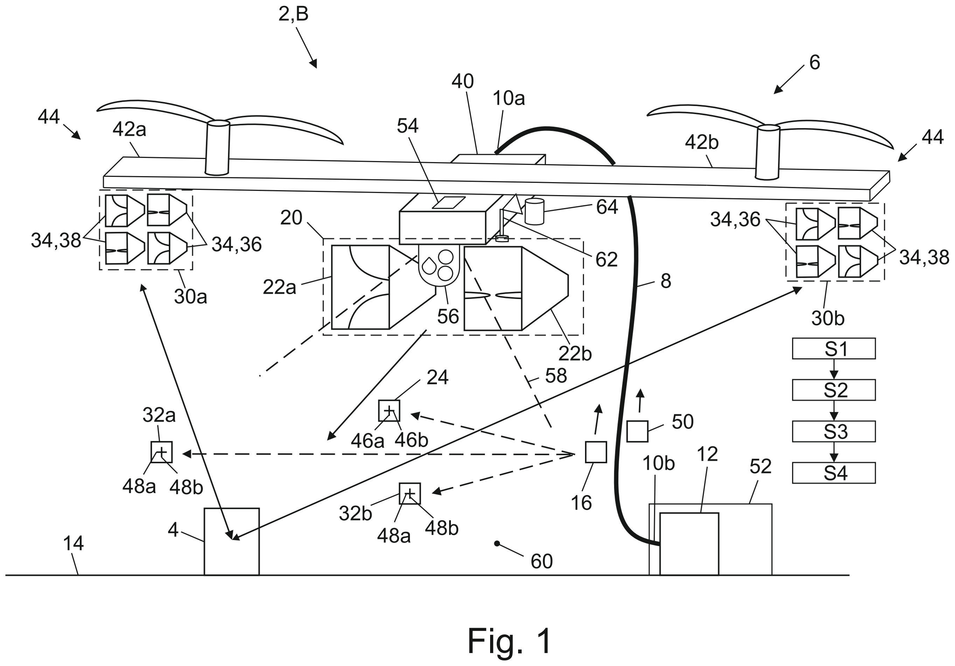

- Figur 1: eine Drohnenanordnung mit Energiequelle und Bodenstation im Flug bei der Detektion und Räumung eines Ziels.

Figur 1 zeigt eine Drohnenanordnung 2. Diese dient zur Räumung eines Ziels 4 in Form eines Explosiv-Ziels, hier einer noch nicht detonierten Mine. Die Drohnenanordnung 2 enthält eine Flugdrohne 6 sowie eine Versorgungsleitung 8 für die Flugdrohne. Flugdrohne 6. Die Versorgungsleitung 8 ist mit ihrem ersten Leitung Ende 10a an der Flugdrohne 6 angeschlossen. Mit ihrem zweiten Leitung Ende 10b ist diese an einer Energiequelle 12 anschließbar und hier angeschlossen. Die Energiequelle 12 ist ein elektrischer Generator. Die Energiequelle 12 befindet sich wie das Ziel 4 auf einem Boden 14, hier dem Erdboden.

Die Drohnenanordnung 2 befindet sich im Betrieb B, das heißt die Flugdrohne 6 ist über die Versorgungsleitung 8 mit der Energiequelle 12 verbunden und aus dieser mit ausreichend elektrischer Energie 16 versorgt und befindet sich im Flug über dem Boden 14. Die Energieübertragung erfolgt also mittels der Versorgungsleitung 8, was durch einen Pfeil in Figur 1 angedeutet ist.

Die Flugdrohne 6 enthält zwei Ortungsquellen 30a,b, die symbolisch durch gestrichelte Rahmen angedeutet sind. Jede der Ortungsquellen 30a,b enthält jeweils vier Ortungsantennen 34. Jede der Ortungsquellen 30a,b ist dazu eingerichtet, einen elektromagnetischen Ortungspuls 32a,b zu erzeugen, der von der Flugdrohne 6 (bzw. den Ortungsantennen 34) weg ausgesendet wird, um das Ziel 4 zu orten.

Die Ortungsquellen 30a,b sind hinsichtlich der Erzeugung der Ortungspulse 32 halbleiterbasiert ausgeführt. Jeweils zwei der vier Ortungsantennen 34 jeder Ortungsquelle 30a,b sind Sendeantennen 36 für die Ortungspulse 32a,b. Die beiden anderen sind als Empfangsantennen 38 ausgebildet, um nicht näher dargestellte Reflexionen zu empfangen, die von ausgesendeten Ortungspulse 32a,b stammen und an Objekten, hier insbesondere dem Ziel 4, reflektiert / gestreut / usw. und damit zurückgesendet werden. Anhand der empfangenen Reflexionen erfolgt die eigentliche Ortung des Ziels 4 in fachüblicher Weise. Die Ortungsquellen 30a,b sind UWB-Quellen und damit die Ortungspulse 32a,b UWB-Pulse.

Die Flugdrohne 6 weist einen Kernkörper 40 sowie zwei Ausleger 42a,b auf, die aus dem Kernkörper gegenüberliegend herausragen bzw. vorstehen. Die Ortungsantennen 34 je einer der beiden Ortungsquellen 30a,b sind an je einem der Auslegern 42a,b, hier deren distalen Enden 44, angeordnet. Insofern sind auch die Empfangsantennen 38 den Ortungspulsen 32a,b zugeordnet.

Die Flugdrohne 2 enthält eine Räumquelle 20, die hier symbolisch durch einen gestrichelten Rahmen angedeutet ist. Die Räumquelle 20 enthält zwei Räumantennen 22a,b und ist dazu eingerichtet, aus der über die Versorgungsleitung 8 zugeführten Energie 16 einen elektromagnetischen Räumpuls 24 zu erzeugen, der von der Flugdrohne 6 (den Räumantennen 22a,b) weg auf das Ziel 4 hin ausgesendet wird, um auf dieses einzuwirken und dieses dadurch möglichst zu räumen. Hinsichtlich der Erzeugung des Räumpulses 24 ist die Räumquelle 20 halbleiterbasiert ausgeführt.

Die Räumquelle 20 ist dazu eingerichtet, den Räumpuls 24 in zwei orthogonalen Polarisationen 46a,b zu erzeugen, was in der Figur symbolisch durch ein Kreuz dargestellt ist. Jede der Räumantennen 42a,b dient dabei zur Erzeugung einer der Polarisationen 46a,b. Die Räumquelle 20 ist hier eine HPEM-DS-Quelle und damit sind die Räumpulse 24 HPEM-DS-Pulse.

Auch die Ortungspulse 32a,b werden jeweils in zwei Polarisationen 48a,b erzeugt (in der Figur ebenso als Kreuze dargestellt). Auch hier dient je eine der beiden Sendeantennen 36 zur Erzeugung je einer der Polarisationen 48a,b. Auch die Empfangsantennen 38 sind entsprechend in zwei verschiedenen Polarisationen / Polarisationsrichtungen ausgeführt.

Die Flugdrohne 6 enthält eine Kameraanordnung 56, diese dient zur Erfassung von nicht näher erläuterten Bilddaten in bzw. aus einem Sichtfeld 58 der Kameraanordnung 56, in Figur 1 durch gestrichelte Linien angedeutet. Die Kameraanordnung 56 dient den Drohnenpiloten zur Unterstützung bei Flug bzw. Navigation der Flugdrohne 6 und zur Unterstützung bei der Detektion und Räumung von Zielen 4.

Die Kamera dient somit im somit im Sichtfeld 58 der Abbildung einer Umgebung 60 der Flugdrohne 6.

In einem ersten Beispiel bringt die Flugdrohne 6 durch Aussendung sukzessiver HPEM-DS-Räumpulse 24das Ziel 4 zur Umsetzung, das heißt hier die Mine zur Explosion, um diese unschädlich zu machen.

In einem alternativen Beispiel ist das Ziel 4 ein IED. Hier gelingt es nicht, dieses durch Bestrahlung mit den HPEM-DS-Räumpulsen 24 unschädlich zu machen. Die Ortungsquellen 30a,b - hier in der Form von UWB Quellen - sind jedoch dazu in der Lage, auch die Ortungspulse 32a,b als UWB-Pulse zweckentfremdet zur Räumung des Ziels 4 auf dieses hin gezielt auszusenden.

Vorliegend gelingt es daher, das Ziel 4 durch sukzessive Bestrahlung mit Ortungspulsen 32a,b zur Explosion zu bringen, um es dadurch unschädlich zu machen.

Die Versorgungsleitung 8 im Beispiel ist dazu eingerichtet, neben der Energie 16 auch ein Lenksignal 50 zu der Flugdrohne 6 zu übertragen, sodass diese anhand des Lenksignals 52 gelenkt bzw. auch anderweitig gesteuert wird, hier zur Auslösung der jeweiligen Pulse angesteuert wird.

Generell ist hier eine bidirektionale Datenübertragung über die Versorgungsleitung 8 möglich, um auch Daten von der Flugdrohne 6 über die Versorgungsleitung 8 zu einer Bodenstation 52 zu übertragen, welche die Energiequelle 12 enthält. Dort sitzen in nicht näher erläuterter Weise Drohnenpiloten, welche den Flug der Drohne 6 überwachen, steuern und auch die Räumung des Ziels 4 durchführen.

Die Flugdrohne 6 besitzt keinen Energiespeicher in Bezug auf die Erzeugung der Räumpulse 24 und Ortungspulse 32a,b. Diese werden also ausschließlich anhand der Energie 16 aus der Energiequelle 12 erzeugt. Die Erzeugung der Räumpulse 24 und der Ortungspulse 32a,b aus (Teilen) der Energie 16 der Energiequelle 12, die über die Versorgungsleitung 8 für die Flugdrohne 6 bereitgestellt ist, ist in der Figur durch gestrichelte Linien symbolisch angedeutet.

Dennoch ist ein Energiespeicher 54 in der Flugdrohne 6 vorhanden; dieser dient jedoch lediglich der Notversorgung von nicht näher erläuterten Flugantrieben und den elektrischen sonstigen Betriebsmitteln der Flugdrohne 6 (Navigation, Flugsteuerung, Kommunikation mit der Bodenstation 52), um bei einer Störung bzw. einem Ausfall der Versorgungsleitung 8 die Flugdrohne 6 sicher zur Bodenstation 52 zurückfliegen zu können. Etwaige Lenksignale 50 werden dann ersatzweise per Funk übertragen, was in der Figur nicht näher dargestellt ist.

Die Flugdrohne 6 enthält außerdem einen Sprengkörper 64. Auch dieser kann auf / in der Nähe eines Ziels 4 abgeworfen werden, um dieses durch Detonation des Sprengkörpers 64 zu räumen, falls eine Räumung mithilfe der Räumpulse 24 bzw. Ortungspulse 32a,b misslingt und beispielsweise eine separate Räumung zu gefährlich wäre.

Die Flugdrohne 6 enthält einen abwerfbaren Markierkörper 62. Dieser kann auf / in der Nähe eines Ziels 4 abgeworfen werden, falls dessen Räumung nicht gelingt und das Ziel 4 in einer separaten Aktion anderweitig geräumt werden muss.

Figur 1 erläutert weiterhin in einem symbolischen Ablaufdiagramm das mithilfe der Drohnenanordnung 2 durchgeführte Räumverfahren, bei dem in einem Schritt S1 die Drohnenanordnung 2 sowie die Energiequelle 12 auf dem Boden 14 bereitgestellt werden.

In einem Schritt S 2 wird die Drohnenanordnung 2 mit dem zweiten Leitungsende 10b an die Energiequelle 12 angeschlossen.

In einem Schritt S3 wird die Flugdrohne 6 im Betrieb B mit elektrischer Energie 16 aus der Energiequelle 12 versorgt und die Flugdrohne 6 geflogen. Dabei sendet die Flugdrohne Ortungspulse 32a,b aus, um das Ziel 4 zu orten.

In einem Schritt S4 erzeugt die Räumquelle 20 während des Fluges der Flugdrohne 6 die elektromagnetischen Räumpulse 24 aus der Energie 16, welche über die Versorgungsleitung 8 aus der Energiequelle 12 zur Räumquelle 20 gelangt. Weiterhin sendet die Flugdrohne 6 die erzeugte Räumpulse 24 auf das Ziel 4 hinaus, um auf dieses einzuwirken und dieses dadurch zu räumen. Ggf. erfolgt hier noch die Räumung des Ziels 4 durch Ortungspulse 32a,b oder Sprengkörper 64 oder die Markierung des Ziels 4 durch Markierkörper 62.

### Bezugszeichenliste

- 2: Drohnenanordnung,
- 4: Ziel
- 6: Flugdrohne
- 8: Versorgungsleitung
- 10a,b: Leitungsende
- 12: Energiequelle
- 14: Boden
- 16: Energie (elektrisch)
- 20: Räumquelle
- 22a,b: Räumantenne
- 24: Räumpuls
- 30a,b: Ortungsquelle
- 32a,b: Ortungspuls
- 34: Ortungsantenne
- 36: Sendeantenne (Ortungspuls)
- 38: Empfangsantenne (Ortungspuls)
- 40: Kernkörper
- 42a,b: Ausleger
- 44: Ende (Ausleger)
- 46a,b: Polarisation (Räumpuls)
- 48a,b: Polarisation (Ortungspuls)
- 50: Lenksignal
- 52: Bodenstation
- 54: Energiespeicher
- 56: Kameraanordnung
- 58: Sichtfeld
- 60: Umgebung
- 62: Markierkörper
- 64: Sprengkörper

- B: Betrieb
- S1-4: Schritt

## Patentansprüche

1. Drohnenanordnung (2) zur Räumung eines Explosiv-Ziels (4),
- mit wenigstens einer Versorgungsleitung (8), die mit einem ersten Leitungsende (10a) an einer Flugdrohne (6) angeschlossen ist und die mit einem zweiten Leitungsende (10b) an einer am Boden (4) befindlichen Energiequelle (12) anschließbar ist, und die dazu eingerichtet ist, die Flugdrohne (6) im Betrieb (B) wenigstens mit elektrischer Energie (16) aus der Energiequelle (12) zu versorgen,
- mit der Flugdrohne (6), die wenigstens eine Räumquelle (20) enthält, die dazu eingerichtet ist, aus der über die Versorgungsleitung (8) zugeführten Energie (16) einen elektromagnetischen Räumpuls (24) zu erzeugen, der dazu eingerichtet ist, von der Flugdrohne (6) weg auf das Ziel (4) hin ausgesendet zu werden, um auf dieses einzuwirken und dadurch zu räumen,
- wobei die Räumquellen (20) hinsichtlich der Erzeugung der Räumpulse (24) halbleiterbasiert ausgeführt sind.

2. Drohnenanordnung (2) nach Anspruch 1,
**dadurch gekennzeichnet, dass**
die Flugdrohne (6) wenigstens eine Ortungsquelle (30a,b) enthält, die dazu eingerichtet ist, einen elektromagnetischen Ortungspuls (32a,b) zu erzeugen, der dazu eingerichtet ist, von der Flugdrohne (6) weg ausgesendet zu werden, um das Ziel (4) zu orten,
- wobei die Ortungsquellen (30a,b) hinsichtlich der Erzeugung der Ortungspulse (32a,b) halbleiterbasiert ausgeführt sind.

3. Drohnenanordnung (2) nach Anspruch 2,
**dadurch gekennzeichnet, dass**
- wenigstens eine der Ortungsquellen (30a,b) wenigstens eine Ortungsantenne (34) enthält,
- die Flugdrohne (6) einen Kernkörper (40) und wenigstens einen aus dem Kernkörper (40) herausragenden Ausleger (42a,b) enthält, und
- wenigstens eine der Ortungsantennen (34) an einem der Ausleger (42a,b) angeordnet ist.

4. Drohnenanordnung (2) nach Anspruch 3,
**dadurch gekennzeichnet, dass**
die Flugdrohne (6) wenigstens zwei jeweils aus dem Kernkörper (40) herausragende Ausleger (42a,b) enthält, und an wenigstens zweien der Ausleger (42a,b) jeweils wenigstens eine der Ortungsantennen (34) angeordnet ist.

5. Drohnenanordnung (2) nach einem der vorhergehenden Ansprüche,
**dadurch gekennzeichnet, dass**
die Räumquelle (20) dazu eingerichtet ist, den Räumpuls (24) in zwei orthogonalen Polarisationen (46a,b) zu erzeugen und von der Flugdrohne (6) weg auszusenden,
und/oder - falls vorhanden - die Ortungsquelle (30a,b) dazu eingerichtet ist, den Ortungspuls (32a,b) in zwei orthogonalen Polarisationen (48a,b) zu erzeugen und von der Flugdrohne (6) weg auszusenden.

6. Drohnenanordnung (2) nach einem der vorhergehenden Ansprüche,
**dadurch gekennzeichnet, dass**
wenigstens eine der Räumquellen (20) eine HPEM-DS-Quelle ist, und/oder - falls vorhanden - wenigstens eine der Ortungsquellen (30a,b) ein UWB-Quelle ist.

7. Drohnenanordnung (2) nach Anspruch 6,
**dadurch gekennzeichnet, dass**
die Drohnenanordnung (2) wenigstens eine der UWB-Quellen enthält und wenigstens eine der UWB-Quellen dazu eingerichtet ist, den UWB-Puls zweckentfremdet auch als Räumpuls (24) aussenden zu können.

8. Drohnenanordnung (2) nach einem der vorhergehenden Ansprüche,
**dadurch gekennzeichnet, dass**
wenigstens eine der Versorgungsleitungen (8) dazu eingerichtet ist, Lenksignale (50) wenigstens an die Flugdrohne (6) zu senden, um diese zu lenken.

9. Drohnenanordnung (2) nach einem der vorhergehenden Ansprüche,
**dadurch gekennzeichnet, dass**
die Flugdrohne (6) im Hinblick auf die Erzeugung der Räumpulse (24) und/oder
- falls vorhanden - der Ortungspulse (32a,b) ohne Energiespeicher ausgeführt ist.

10. Drohnenanordnung (2) nach einem der vorhergehenden Ansprüche,
**dadurch gekennzeichnet, dass**
die Flugdrohne (6) eine Kameraanordnung (56) zur Abbildung ihrer Umgebung (60) enthält.

11. Drohnenanordnung (2) nach einem der vorhergehenden Ansprüche,
**dadurch gekennzeichnet, dass**
die Flugdrohne (6) wenigstens einen abwerfbaren Markierkörper (62) für Ziele (4) und/oder wenigstens einen abwerfbaren Sprengkörper (64) für Ziele (4) enthält.

12. Verfahren zur Räumung eines Explosiv-Ziels (4), bei dem:
- die Drohnenanordnung (2) nach einem der vorhergehenden Ansprüche bereitgestellt wird,
- die Energiequelle (12) am Boden (14) bereitgestellt wird,
- die Drohnenanordnung (2) mit dem zweiten Leitungsende (10b) an die Energiequelle (12) angeschlossen wird,
- die Flugdrohne (6) im Betrieb (B) wenigstens mit elektrischer Energie (16) aus der Energiequelle (12) versorgt wird,
- die Flugdrohne (6) geflogen wird,
- die Räumquelle (20) während des Fluges der Flugdrohne (6) aus der über die Versorgungsleitung (8) zugeführten Energie (16) einen elektromagnetischen Räumpuls (24) erzeugt, der von der Flugdrohne (6) weg auf das Ziel (4) hin ausgesendet wird, um auf dieses einzuwirken und dadurch zu räumen.
